## Europäisches Patentamt

## European Patent Office

## Office européen des brevets

(19)

(11) Veröffentlichungsnummer: **0 232 481**
**B1**

(12) **EUROPÄISCHE PATENTSCHRIFT**

(45) Veröffentlichungstag der Patentschrift:
**08.08.90**

(51) Int. Cl.⁵: **B01D 11/02, C10C 3/08,**
**C10C 1/18**

(21) Anmeldenummer: **86115767.5**

(22) Anmeldetag: **13.11.86**

(54) Verfahren zum Fraktionieren von Steinkohlenteerpech und Verwendung der dabei erhältlichen Fraktionen.

(30) Priorität: **07.02.86 DE 3603883**

(43) Veröffentlichungstag der Anmeldung:
**19.08.87 Patentblatt 87/34**

(45) Bekanntmachung des Hinweises auf die Patenterteilung:
**08.08.90 Patentblatt 90/32**

(84) Benannte Vertragsstaaten:
**DE FR GB IT NL**

(56) Entgegenhaltungen:
**DE-A- 1 493 190**
**DE-A- 3 017 876**
**DE-A- 3 539 432**
**US-A- 2 980 602**
**US-A- 3 558 468**
**US-A- 4 354 928**

(73) Patentinhaber: **RÜTGERSWERKE AKTIENGESELLSCHAFT, Mainzer Landstrasse 217, D-6000 Frankfurt am Main 1(DE)**

(72) Erfinder: **Beneke, Herbert, Dr., Wartburgstrasse 97, D-4620 Castrop-Rauxel(DE)**
Erfinder: **Peter, Siegfried, Prof. Dr., Lindenweg 3, D-8521 Uttenreuth-Weiher(DE)**

ACTORUM AG

## Beschreibung

Die Erfindung betrifft ein Verfahren zum Fraktionieren von Steinkohlenteerpech durch Extraktion mit einem überkritischen Gas und die Verwendung der dabei erhältlichen Fraktionen.

Steinkohlenteerpeche werden charakterisiert durch ihren Erweichungspunkt (EP), ihren Verkokungsrückstand, ihre Löslichkeit in verschiedenen Lösungsmitteln, ihren Gehalt an Aschebildnern und gegebenenfalls durch ihre Dichte und ihren Destillationsverlauf. Bisher war es üblich, diese Eigenschaften durch die Auswahl geeigneter Rohteere, mechanisches Entfernen von Feststoffen - Aschebildnern und Chinolinunlöslichem (QI) - und thermische Behandlung zu variieren. Stehen geeignete Rohteere in ausreichender Menge nicht zur Verfügung, so muß der Gehalt an unerwünschten Bestandteilen durch Zentrifugieren, Filtrieren oder promotorbeschleunigtes Absitzenlassen in den Ausgangsteeren vermindert werden. Dabei werden diese Bestandteile oft nur teilweise und unzureichend entfernt, und andere erwünschte Bestandteile gehen verloren. Die durch die anschließende fraktionierende Destillation gewonnenen Peche entsprechen nicht immer den anwendungsbezogenen Spezifikationen, so daß es weiterer Verfahrensschritte, beispielsweise einer thermischen Behandlung, bedarf.

Es sind auch zahlreiche Verfahren bekannt, die unerwünschten Bestandteile direkt aus dem Pech, statt aus dem Teer entfernen. Die angewandten Verfahren sind jedoch vergleichbar. Ebenso ist ein Verfahren bekannt, aus Teeren durch zweistufige thermische Behandlung unter Druck mit anschließender Destillation unterschiedliche Peche zu gewinnen (DE-B 2 121 458), die im Gemisch z. B. den verschiedenen Spezifikationen von Elektrodenbinde- und Imprägniermitteln entsprechen. Durch die thermische Behandlung der Teere und Öle aus der ersten Behandlungsstufe werden jedoch wertvolle Öle in Pech umgewandelt. Falls es gelänge, Pech ohne Veränderung seiner Inhaltsstoffe zu fraktionieren, so könnten durch Auswahl der Fraktionen oder deren Gemische Peche mit den jeweils gewünschten Eigenschaften in einfacher Weise hergestellt werden.

Es ist bekannt, Steinkohlenteer mit überkritischem Ethylen zu extrahieren (M & B Monograph CE/5, (1971), Seiten 43 und 44). Bei 298 K und 300 bar (30 MPa) verbleiben 40 Gew.% eines Pechrückstandes gegenüber 50 Gew.% bei der destillativen Aufarbeitung. Das Verfahren wird in der US-A 3 558 468 näher beschrieben. Die in dem überkritischen Ethylen gelösten Teerbestandteile werden durch schrittweises Reduzieren des Druckes von dem Gas getrennt, wobei schwerere und leichtere Fraktionen gewonnen werden. Insgesamt wurden jedoch nur etwas mehr als 55 Gew.% verdampfbare Öle extrahiert. Bezogen auf Steinkohlenteernormalpech (50 Gew.% vom Teer) beträgt der mit überkritischem Ethylen extrahierbare Anteil nur 10 Gew.%. Nichtflüchtige Teerharze können nicht extrahiert werden. Daher ist dieses Verfahren für die Fraktionierung von Steinkohlenteerpech ungeeignet, obwohl die niedrige Extraktionstemperatur keine Veränderung der Pechbestandteile bewirkt.

Es bestand daher die Aufgabe, ein Extraktionsverfahren für Steinkohlenteerpech zu entwickeln, mit dem es möglich ist, beliebige Steinkohlenteerpeche ohne thermische Belastung so zu fraktionieren, daß aus den einzelnen Fraktionen Pech-Rohstoffe für alle bekannten Anwendungsfälle in einfacher Weise hergestellt werden können. Die Peche selbst werden dabei aus Steinkohlenteeren beliebiger Herkunft ohne Vorauswahl oder Vorbehandlung durch schonende fraktionierende Destillation gewonnen.

Diese Aufgabe wird erfindungsgemäß dadurch gelöst, daß die Extraktion mit dem überkritischen Gas in Gegenwart eines Schleppmittels durchgeführt wird, wobei die Peche mit Ausnahme der Feststoffe gelöst werden, und nach Abscheiden der Pechfraktionen das überkritische Gas und das Schleppmittel in die Extraktionsstufe zurückgeführt werden.

Als überkritisches Gas werden aliphatische oder olefinische Kohlenwasserstoffe, vorzugsweise mit 2 bis 5 Kohlenstoffatomen, halogenhaltige Kohlenwasserstoffe, insbesondere mit bis zu 4 Kohlenstoffatomen, oder Gemische dieser Kohlenwasserstoffe oberhalb ihrer kritischen Temperatur und ihres kritischen Drucks verwendet.

Als Schleppmittel kommen ein- oder mehrkernige Kohlenwasserstoffe infrage, die gegebenenfalls mit Alkylgruppen, insbesondere mit bis zu 2 Kohlenstoffatomen, oder mit einer Aminogruppe substituiert sind und sowohl aromatisch als auch ganz oder teilweise hydriert sein können. Auch die Verwendung ein- oder mehrkerniger heterocyclischer Verbindungen, insbesondere stickstoffhaltiger heterocyclischer Verbindungen, bei denen ein Kern oder beide Kerne heterocyclisch sind, ist möglich, ebenso Alkylester aromatischer Säuren mit vorzugsweise 1 bis 6 Kohlenstoffatomen in der Alkoholkomponente. Geeignete Schleppmittel sind beispielsweise Rohbenzol, Waschbenzol, Platformate mit einem Siedebereich zwischen 70 und 200°C, vorzugsweise zwischen 100 und 150°C, Methylnaphthalin und Methylnaphthalinfraktionen sowie deren Gemische.

Die Extraktionsstufe wird vorzugsweise unter solchen Temperatur- und Druckbedingungen durchgeführt, die oberhalb des kritischen Druckes und der kritischen Temperatur des überkritischen Gases, aber unterhalb der kritischen Temperatur des Schleppmittels liegen. Im allgemeinen sind dies Drücke zwischen 80 und 300 bar (8 und 30 MPa) und Temperaturen im Bereich von 80 bis 300°C. Bevorzugt wird das Pech unter einem Druck von 150 bis 250 bar (15-25 MPa) bei einer Temperatur von 120 bis 250 °C extrahiert. Es entsteht dabei ein einphasiges Gemisch aus Pech, Schleppmittel und überkritischem Gas. Die ungelösten Feststoffe sedimentieren und können so abgetrennt werden.

Die Extraktion von Pechen mit überkritischen Gasen zur Abtrennung unerwünschter Verunreinigungen ist in dem polnischen Patent 127 934 beschrieben. Die Lösungsmittel sollen eine kritische Temperatur von mehr als 30°C und einen kritischen Druck von wenigstens 40 bar (4 bar) aufweisen. Bevorzugt werden Toluol, Propan und Rohbenzol als Lösungsmittel vorgeschlagen. Die Abtrennung von Aschen und Anthracenöl-Unlöslichem, das etwa dem Chinolinunlöslichen (QI) entspricht, gelingt nur bei Verwendung von Rohbenzol bei 320°C und 105 bar (10,5 MPa) vollständig. Die Ausbeuten sind mit 52 Gew.% jedoch niedrig. Ein weiterer Nachteil des Verfahrens ist es, daß 94,2 Gew.% des im Einsatzpech vorhandenen Benzolunlöslichen im Rückstand verbleiben. Das Extraktpech ist daher für viele Anwendungszwecke, bei denen ein hoher Gehalt an β-Harzen (Differenz zwischen Benzolunlöslichem und Chinolinunlöslichem) gefordert wird, wie etwa bei Elektrodenbindemitteln, nicht zu verwenden.

Nach dem erfindungsgemäßen Verfahren können aus Steinkohlenteerpechen bei wesentlich niedrigeren Temperaturen bis zu 94 Gew.% extrahiert werden.

Die Abtrennung von Feststoffen durch Extraktion mit einem überkritischen Gas und einem Schleppmittel ist für Schieferöle mit etwa 25% Feststoffen bekannt (D. Stützer: Zur Abtrennung von feinen Feststoffen aus einem viskosen Schieferöl mit Hilfe der überkritischen Fluidextraktion, Dissertation, Erlangen 1983). Die Feststoffabscheidung gelingt zu 97,2 Gew.% bei einer Ölausbeute von 77,2%. Wegen des hohen Feststoffgehaltes von etwa 25 Gew.% und der überwiegend paraffinisch-olefinischen Zusammensetzung des Schieferöls mit einem Siedebereich von 200 - 360°C ist dieses Einsatzprodukt mit dem hocharomatischen hochsiedenden Steinkohlenteerpech nicht vergleichbar.

Das Verfahren ist auch in der DE-A 3 017 876 beschrieben. Als weiteres Beispiel wird die Extraktion eines feststoffhaltigen Öls aus der Kohlehydrierung beschrieben. Diese Öle enthalten jedoch weniger als 2% extrahierbare Asphaltene und sind daher mit Steinkohlenteerpechen nicht vergleichbar.

Da die im Teer vorhandenen ein- und zweikernigen Aromaten als Schleppmittel im Sinne der DE-A 3 017 876 anzusehen sind, ist es überraschend, daß nach dem erfindungsgemäßen Verfahren im Gegensatz zu dem Verfahren nach der US-A 3 558 468 ein so hoher Anteil des Steinkohlenteerpechs extrahiert und auch fraktioniert werden kann.

Die Konzentration des Pechs in dem aus Schleppmittel und überkritischer Komponente bestehenden Extraktionsmittel wird dabei sowohl durch das Lösemittelverhältnis als auch durch Druck und Temperatur des Systems bestimmt. Da Viskosität und Dichte der überkritischen Lösung des Pechs im Extraktionsmittel mit wachsendem Gehalt an Pech ansteigen, und dadurch die Sedimentation der Feststoffe verlangsamt wird, ist es zweckmäßig, die Pechkonzentration auf etwa 2 bis 40 Gew.% zu beschränken. Vorzugsweise werden Pechkonzentrationen im Bereich von 5 bis 30 Gew.% angewendet. Wegen der geringen Viskosität des überkritischen Extraktionsmittels erfolgt die Sedimentation der Feststoffe so schnell, daß keine mechanischen Hilfsmittel erforderlich sind, um die Feststoffe aus der überkritischen fluiden Phase abzutrennen.

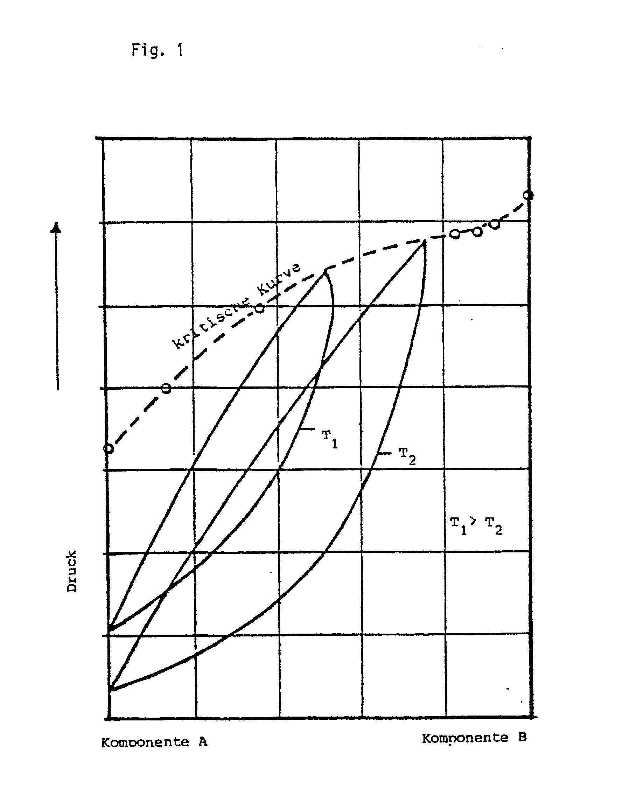

Das aus dem Schleppmittel und der überkritischen Komponente bestehende Lösungsmittel ist unter den Extraktionsbedingungen überkritisch, d.h., sein Zustandspunkt liegt oberhalb der kritischen Kurve des binären bzw. quasibinären Systems. Dies ist anhand der Fig. 1 erläutert. Im Druck-Konzentrations-Diagramm sind für einige Temperaturen die Phasengrenzlinien eingetragen. Im Bereich der kritischen Temperatur des Schleppmittels und der kritischen Temperatur der überkritischen Komponente haben die Phasengrenzlinien die Gestalt einer Schleife, die an der Koordinate des unterkritischen Schleppmittels endet. Die Verbindungslinie der kritischen Punkte, in denen sich die Phasengrenzlinie für den flüssigen und gasförmigen Zustand berühren, die kritische Kurve des Systems, ist eingezeichnet. Sie verläuft vom kritischen Punkt der reinen Komponente A zum kritischen Punkt der reinen Komponente B. Ein solches System wird als ein System mit geschlossener kritischer Kurve bezeichnet. Nach dem Verfahren dieser Erfindung werden Schleppmittel und überkritische Komponente so gewählt, daß sie ein System mit geschlossener kritischer Kurve bilden.

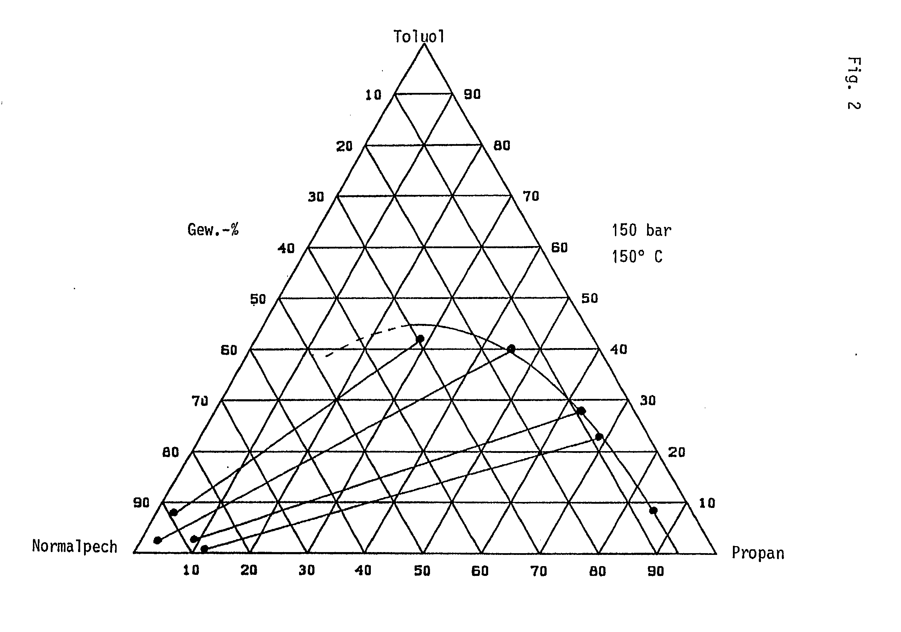

Überraschenderweise lösen sich nicht nur die leichten Anteile des Pechs, d.h. die in Toluol löslichen (TS), sondern auch die in Toluol (TI) und sogar die in Chinolin unlöslichen Anteile (QI). Im Dreiecksdiagramm (Fig. 2) ist als Beispiel das Phasenverhalten des quasiternären Systems Normalpech, Toluol, Propan bei 150 °C und 150 bar (15 MPa) graphisch dargestellt. Bei Gehalten von mehr als 50 Gew.% Toluol ist das System unter diesen Bedingungen einphasig. Der Umfang des Zweiphasengebietes hängt von Druck, Temperatur und der Wahl von Schleppmittel und überkritischer Komponente ab. Der Druckbereich liegt zwischen 100 und 300 bar (10 und 30 MPa), vorzugsweise zwischen 150 und 250 bar (15 und 25 MPa). Die Regenerierung des mit Normalpech beladenen Exktraktionsmittels nach dem Verfahren dieser Erfindung kann durch Erhitzen und/oder durch Entspannen bewirkt werden. Die Regenerierung wird in einer Reihe von Schritten durchgeführt, wobei schrittweise durch Temperaturerhöhung und/oder Druckerniedrigung die Dichte des Extraktionsmittels herabgesetzt wird. Infolgedessen fallen die gelösten Pechanteile fraktioniert an. Zunächst fallen die Anteile mit der geringsten Löslichkeit, danach die etwas leichter löslichen usw. an, bis schließlich auch die leichtlöslichen Anteile ausfallen und das Extraktionsmittel vollständig regeneriert ist und in den Extraktionsapparat rezirkuliert werden kann.

Beispiel 1:

200 g Normalpech mit einem Gehalt an Aschebildnern von 0,23 Gew.%, einem Gehalt an Chinolinunlöslichem (QI) von 5,8 Gew.%, einem Gehalt an Toluolunlöslichem (TI) von 22,8 Gew.% und einem Erweichungspunkt (EP) von 70 °C nach Kraemer-Sarnow (K.-S.) werden in einen Rührautoklaven gegeben, der auf 150 °C aufgeheizt ist. Sodann wird bei einem Druck von 180 bar (18 MPa) ein Gemisch aus 30 Gew.% Propan und 70 Gew.% Toluol als Extraktions- bzw. Schleppmittel unter Rühren durch den Autoklaven geleitet. Das unter diesen Bedingungen überkritische Extraktionsmittel löst bis zu einer Konzentration von etwa 10 Gew.% Pech auf und transportiert es aus dem Autoklaven heraus. Die Strömungsgeschwindigkeit des gasförmigen Extraktionsmittels beträgt 2,2 l/h. Das mit Pech beladene Extraktionsmittel wird in drei aufeinander folgende Regenerierautoklaven übergeführt und stufenweise bis auf einen Druck von 50 bar (5 MPa) entspannt. Die Temperatur bei der Regenerierung beträgt 150 °C. Die bei der Entspannung wegen des Joule-Thomson-Effektes eintretende Abkühlung wird durch Wärmezufuhr ausgeglichen. Das regenerierte Gemisch aus Extraktions- und Schleppmittel wird im Kreislauf geführt. In dem Regenerierautoklaven werden nach einer Extraktionszeit von 5 h folgende Pechfraktionen gewonnen:

| Fraktion | Autoklavendruck | | Ausbeute | Asche | QI | TI–QI | TS |
| Nr. | bar | (MPa) | Gew.% | Gew.% | Gew.% | Gew.% | Gew.% |
| --- | --- | --- | --- | --- | --- | --- | --- |
| 1 | 180 | (18) | 13 | 1,8 | 44,0 | 53,7 | 2,3 |
| 2 | 140 | (14) | 32 | 0 | 0,1 | 39,6 | 60,3 |
| 3 | 100 | (10) | 35 | 0 | 0,1 | 9,0 | |
| 4 | 50 | (5) | 20 | 0 | 0 | 0,1 | 99,9 |

Die Fraktion 1 ist der im Rührautoklaven verbleibende, unter Druck flüssige Extraktionsrückstand. Die Fraktion 4 besteht nur aus Toluollöslichem (TS).

Beispiel 2:

2 kg Normalpech (EP (K.-S.) = 72 °C, Aschebildner = 0,23 Gew.%, QI = 5,8 Gew.%, TI = 22,7 Gew.%) werden in einen Rührautoklaven von 10 l Inhalt gegeben. Der Autoklav wird auf eine Temperatur von 190 °C aufgeheizt. Bei einem Druck von 200 bar (20 MPa) wurde ein Gemisch aus 50 Gew.% Toluol und 50 Gew.% Propan als Extraktions- bzw. Schleppmittel unter Rühren durch den Autoklaven geleitet. Die Strömungsgeschwindigkeit des unter diesen Bedingungen überkritischen Extraktionsmittels beträgt 14 l/h. Während der Extraktionszeit von etwa 70 min beträgt die mittlere Beladung des Extraktionsmittels etwa 15 Gew.%. Das mit Pech beladene Extraktionsmittel wird in drei aufeinander folgende Regenerierautoklaven überführt und stufenweise auf einen Druck von 50 bar (5 MPa) entspannt. Die Temperatur im Regenerierautoklaven wird auf 190 °C gehalten. Das regenerierte Gemisch aus Toluol und Propan wird in den Rührautoklaven zurückgeführt. Es werden folgende Pechfraktionen erhalten:

| Fraktion | Autoklavendruck | | Ausbeute | Asche | QI-Asche | TI–QI | TS |
| Nr. | bar | (MPa) | Gew.% | Gew.% | Gew.% | Gew.% | Gew.% |
| --- | --- | --- | --- | --- | --- | --- | --- |
| 1 | 200 | (20) | 7 | 3,2 | 72,0 | 19,5 | 5,3 |
| 2 | 150 | (15) | 28,5 | 0 | 2,7 | 55,7 | 41,6 |
| 3 | 100 | (10) | 39,8 | 0 | Sp | 13,6 | 86,4 |
| 4 | 50 | (5) | 24,7 | 0 | 0 | Sp. | 99,9 |

Beispiel 3:

Das Beispiel 2 wird mit Waschbenzol als Schleppmittel und Flüssiggas (LPG) bei einer Strömungsgeschwindigkeit von 25 l/h wiederholt. Es werden folgende Pechfraktionen gewonnen:

| Fraktion | Autoklavendruck | | Ausbeute | Asche | QI-Asche | TI–QI | TS |
| Nr. | bar | (MPa) | Gew.% | Gew.% | Gew.% | Gew.% | Gew.% |
| --- | --- | --- | --- | --- | --- | --- | --- |
| 1 | 200 | (20) | 6 | 3,7 | 85,0 | 8,5 | 2,8 |
| 2 | 190 | (19) | 8,5 | 0 | 8,2 | 75,5 | 16,3 |
| 3 | 130 | (13) | 31,1 | 0 | Sp. | 50,8 | 49,1 |
| 4 | 50 | (5) | 54,4 | 0 | 0 | Sp. | 99,9 |

Der Extraktionsrückstand liegt nach dem Entspannen als pulverförmiger Feststoff vor.

Beispiel 4:

Beispiel 2 wird bei einer Temperatur von 150 °C mit Propan als Trägergas und Toluol als Schleppmittel wiederholt. Dabei werden die in der nachfolgenden Tabelle angegebenen Temperaturen und Drücke angewendet und Fraktionen mit den angegebenen Eigenschaften erhalten:

| Fraktion | Autoklavendruck | | Ausbeute | Asche | QI-Asche | TI–QI | TS |
| Nr. | bar | (MPa) | Gew.% | Gew.% | Gew.% | Gew.% | Gew.% |
|---|---|---|---|---|---|---|---|
| 1 | 200 | (20) | 5,9 | 3,4 | 33,6 | 60,3 | 2,7 |
| 2 | 150 | (15) | 33,5 | Sp. | 13,4 | 46,0 | 40,6 |
| 3 | 130 | (13) | 26,2 | Sp. | <0,1 | 6,1 | 93,8 |
| 4 | 80 | (8) | 34,4 | Sp. | Sp. | Sp. | 99,9 |

Beispiel 5:

Beispiel 4 wurde wiederholt und bei geänderten Drücken folgende Fraktionen erhalten:

| Fraktion | Autoklavendruck | | Ausbeute | Asche | QI-Asche | TI–QI | TS |
| Nr. | bar | (MPa) | Gew.% | Gew.% | Gew.% | Gew.% | Gew.% |
|---|---|---|---|---|---|---|---|
| 1 | 200 | (20) | 5,9 | 3,4 | 33,6 | 60,3 | 2,7 |
| 2 | 165 | (16,5) | 18 | Sp. | 25 | 61,2 | 13,8 |
| 3 | 145 | (14,5) | 21 | Sp. | <0,1 | 29,0 | 71,0 |
| 4 | 80 | (8) | 55,1 | Sp. | Sp. | Sp. | 99,9 |

Die Fraktionierung kann wesentlich verbessert werden, wenn statt der Regenerierautoklaven nach Absenkung des Druckes oder/und Temperaturerhöhung Extraktionskolonnen verwendet werden, bei denen die Gasphase im Gegenstrom zur ausgefällten Pechfraktion geführt wird. Für die meisten Anwendungsfälle ist diese Fraktionierung jedoch nicht erforderlich. Die Gewinnung einer toluollöslichen, einer chinolinlöslichen und einer aschefreien Pechfraktion genügt den gestellten Anforderungen, so daß der für die bessere Fraktionierung erforderliche apparative Aufwand nicht gerechtfertigt wäre.

Gemische aus den Fraktionen 1 und 2 in den Beispielen 1 bis 5 können in Mengen bis zu 10 % einer Kohlemischung zur Verbesserung des Verkokungsverhaltens zugesetzt werden.

Beispiel 6:

Eine Mischung aus 70 Gew.% einer hochflüchtigen Kohle (37 % Flüchtige waf., int. Klassifikations-Nr. 632) und 30 Gew. % einer Magerkohle (19 % Flüchtige waf., int. Klassifikations-Nr. 332) werden mit 4 bzw. 8 % eines Gemisches aus 50 Gew.-% der Fraktion 1 und 50 Gew.-% der Fraktion 2 des Beispiels 1 gemischt und in einem Versuchsofen (Einsatz 7 kg) bei 1000 °C und einer Garungszeit von 5 h verkokt. Folgende Ergebnisse wurden erreicht:

| Ofenbeschickung | Micum Indices der erzeugten Kokse | |
| | M 10 | M 30 |
|---|---|---|
| Kohlemischung ohne Zusatz | 11,5 | 78 |
| Kohlemischung mit 4% Pechfraktion | 10 | 84 |
| Kohlemischung mit 8% Pechfraktion | 10 | 88 |

Die Fraktion 4 der Beispiele 1 bis 5 kann allein oder im Gemisch mit hochsiedenden aromatischen Kohlenwasserstofffraktionen, die als Rußöle bekannt sind, als Rohstoff für die Rußherstellung dienen. Wegen des hohen Bureau of Mines Correlation Index (BMCI) kann so die Qualität erdölstämmiger Rußöle verbessert werden.

Beispiel 7:

50 Gew.-Teile einer Pechfraktion entsprechend der Fraktion 4 des Beispiels 3 werden in 50 Gew.-Teilen heißem filtrierten Anthracenöl gelöst. Die Mischung hat einen BMCI von 179. In einem Furnacereaktor wird daraus unter üblichen Bedingungen in ca. 50 %iger Ausbeute ein typgerechter Gummiruß hergestellt.

Gemische der nahezu QI-freien Fraktionen 3 und 4 der Beispiele 1 bis 5 können als Rohstoff für die Herstellung von Nadelkoks oder als Imprägniermittel für Kohlenstofformkörper, wie Elektroden und Anoden, verwendet werden. Durch Änderung des Mischungsverhältnisses können Viskosität und Verkokungsrückstand des Imprägniermittels wirkungsvoll beeinflußt werden.

Beispiel 8:

38 Gew.-Teile einer Pechfraktion entsprechend der Fraktion 3 des Beispiels 3 und 62 Gew.-Teile einer Pechfraktion entsprechend der Fraktion 4 des Beispiels 2 werden im flüssigen Zustand gemischt. Das aschefreie Gemisch hat folgende Eigenschaften:

EP (K.-S.) 67 °C
QI 0,1 %
TI 19,3 %
Verkokungsrückstand (Conradson) 50,3 %
Dichte 20 °C 1,28 g/cm³

und wird als Imprägniermittel für Stahlwerkselektroden verwendet.

Gemische aus der Fraktion 2, 3 und 4 können als Elektrodenbindemittel verwendet werden. Auch hier lassen sich durch Wahl der Mischungsverhältnisse Bindemittel mit beliebigen Beschaffenheitsvorschriften herstellen.

Beispiel 9:

Pechfraktionen entsprechend der Fraktionen 2, 3 und 4 des Beispiels 5 werden flüssig gemischt, um daraus aschefreie Elektrodenbindemittel herzustellen. Zur Einstellung des Erweichungspunktes wird die Fraktion 4 einer schonenden Vacuumdestillation unterworfen, wobei 5 Gew.% eines Öls gewonnen wer-den. Der Rückstand wird als Fraktion 4* bezeichnet.

| Mischungs-verhältnis | EP (K.–S.) | QI | TI | Verkokungs-rückstand |
|---|---|---|---|---|
| Fr.2:Fr.3:Fr.4* | °C | Gew.% | Gew.% | (Conradson) Gew.% |
| 32:47:21 | 80 | 8 | 33 | 53 |
| 52:21:27 | 82 | 13 | 38 | 55 |
| 68:4:28 | 85 | 17 | 43 | 57 |

Wie aus der Tabelle entnommen werden kann, lassen sich alle bekannten Bindemitteltypen aschefrei aus den erfindungsgemäß hergestellten Fraktionen mischen.

Darüber hinaus bieten sich noch zahlreiche Anwendungsmöglichkeiten für die erfindungsgemäß hergestellten Pech-Rohstoffe wie etwa für
plastifizierte Peche,
Pech-Kunststoffkombinationen,
Pech-Emulsionen,
Straßenbaubindemittel,
Stahlwerksteere und
Teerpech-Lacke

**Patentansprüche**

1. Verfahren zum Fraktionieren von Steinkohlenteerpechen durch Extraktion bei erhöhter Temperatur und erhöhtem Druck in einem überkritischen Gas unde Abscheiden der einzelnen Pechfraktionen in mehreren Stufen durch Absenken des Druckes oder/und Temperaturerhöhung, dadurch gekennzeichnet, daß die Extraktion mit dem überkritischen Gas in Gegenwart eines Schleppmittels durchgeführt wird, wobei die Peche mit Ausnahme der Feststoffe gelöst werden, und nach Abscheiden der Pechfraktionen das überkritische Gas und das Schleppmittel in die Extraktionsstufe zurückgeführt werden.

2. Verfahren nach Anspruch 1, dadurch gekennzeichnet, daß als überkritisches Gas eine der folgenden Verbindungen oder ihrer Gemische oberhalb ihrer kritischen Temperatur und ihres kritischen Druckes verwendet wird: ein aliphatischer Kohlenwasserstoff, vorzugsweise mit 2 bis 5 Kohlenstoffatomen, ein olefinischer Kohlenwasserstoff, vorzugsweise mit 2 bis 5 Kohlenstoffatomen, ein halogenhaltiger Kohlenwasserstoff, insbesondere mit 1 bis 4 Kohlenstoffatomen.

3. Verfahren nach Anspruch 1, dadurch gekennzeichnet, daß als überkritisches Gas ein Flüssiggas (LPG) verwendet wird.

4. Verfahren nach Anspruch 1 bis 3, dadurch gekennzeichnet, daß als Schleppmittel ein- oder mehrkernige Kohlenwasserstoffe, die gegebenenfalls mit Alkylgruppen, insbesondere mit 1 bis 2 Kohlenwasserstoffatomen oder einer Aminogruppe substituiert sind und sowohl aromatische als auch ganz oder teilweise hydriert sein können, ein- oder zweikernige heterocyclische Verbindungen, insbesondere stickstoffhaltige heterocyclische Verbindungen, bei denen ein Kern oder beide Kerne heterocyclisch sind, Alkylester aromatischer Säuren mit vorzugsweise 1 bis 6 Kohlenstoffatomen in der Alkoholkomponente oder deren Gemische verwendet werden.

5. Verfahren nach Anspruch 1 bis 3, dadurch gekennzeichnet, daß als Schleppmittel Waschbenzol verwendet wird.

6. Verfahren nach Anspruch 1 bis 3, dadurch gekennzeichnet, daß als Schleppmittel Rohbenzol verwendet wird.

7. Verfahren nach Anspruch 1 bis 3, dadurch gekennzeichnet, daß als Schleppmittel ein Platformatschnitt im Siedebereich von 70 bis 200 °C, vorzugsweise von 100 bis 150 °C verwendet wird.

8. Verfahren nach den Ansprüchen 1 bis 3, dadurch gekennzeichnet, daß als Schleppmittel Methylnaphthalin oder eine Methylnaphthalin enthaltende Fraktion verwendet wird.

9. Verfahren nach den Ansprüchen 1 bis 3, dadurch gekennzeichnet, daß als Schleppmittel ein Gemisch der in den Ansprüchen 5 bis 8 beanspruchten Schleppmittel verwendet wird.

10. Verfahren nach einem der Ansprüche 1 bis 9, dadurch gekennzeichnet, daß das Pech bei Temperaturen im Bereich von 80 °C bis 300 °C, vorzugsweise von 120 bis 250 °C mit einem Gemisch aus einem überkritischen Gas und einem unterkritischen Schleppmittel behandelt wird.

11. Verfahren nach einem der Ansprüche 1 bis 10, dadurch gekennzeichnet, daß das Pech bei Drücken im Bereich von 80 bis 300 bar (8 bis 30 MPa), vorzugsweise 150 bis 250 bar (15 bis 25 MPa) mit einem Gemisch aus einem überkritischen Gas und einem unterkritischen Schleppmittel behandelt wird.

12. Verfahren nach den Ansprüchen 1 bis 11, dadurch gekennzeichnet, daß die Pechkonzentration in der überkritischen Lösung 2 bis 40 Gew.%, vorzugsweise 5 bis 30 Gew.% beträgt.

13. Verwendung der nach Anspruch 1 erhältlichen, TI-freien Fraktionen, gegebenenfalls im Gemisch mit hochsiedenden aromatischen Kohlenwasserstofffraktionen, als Rußrohstoff.

14. Verwendung des Gemisches aus nach Anspruch 1 erhältlichen, QI-freien Fraktionen als Imprägniermittel für Kohlenstoffformkörper.

15. Verwendung des Gemisches aus nach Anspruch 1 erhältlichen aschefreien Fraktionen, gegebenenfalls nach Abdestillieren von Ölen, als Elektrodenbindemittel.

16. Verwendung der nach Anspruch 1 erhältlichen aschereichen Fraktion zur Herstellung von Kokskohlezusatzmitteln.

## Claims

1. A process for fractionating coal tar pitches by extraction at elevated temperature and elevated pressure in a supercritical gas, and precipitation of the individual pitch fractions in a plurality of stages by lowering the pressure and/or increasing the temperature, characterized in that the extraction with the supercritical gas is performed in the presence of an entrainer, the pitches being dissolved with the exception of the solids, and after the precipitation of the pitch fractions the supercritical gas and the entrainer are fed back into the extraction stage.

2. A process according to Claim 1, characterized in that one of the following compounds or mixtures thereof is used above its critical temperature and its critical pressure as the supercritical gas: an aliphatic hydrocarbon, preferably with from 2 to 5 carbon atoms, an olefinic hydrocarbon, preferably with from 2 to 5 carbon atoms, a halogen-containing hydrocarbon, preferably with from 1 to 4 carbon atoms.

3. A process according to Claim 1, characterized in that a liquefied petroleum gas (LPG) is used as the supercritical gas.

4. A process according to Claims 1 to 3, characterized in that mono- or multi-nuclear hydrocarbons, which where appropriate are substituted with alkyl groups, in particular with 1 or 2 hydrocarbon atoms or an amino group and which can be both aromatic and completely or partially hydrogenated, mono- or bi-nuclear heterocyclic compounds, in particular nitrogen-containing heterocyclic compounds, in which one or both nuclei are heterocyclic, alkyl esters of aromatic acids with preferably with from 1 to 6 carbon atoms in the alcohol component mixtures thereof, are used as the entrainers.

5. A process according to Claims 1 to 3, characterized in that washing benzene is used as the entrainer.

6. A process according to Claims 1 to 3, characterized in that crude benzene is used as the entrainer.

7. A process according to Claims 1 to 3, characterized in that a platformate section in the boiling range of from 70 to 200°C, preferably from 100 to 150°C, is used as the entrainer.

8. A process according to Claims 1 to 3, characterized in that methyl naphthalene or a fraction containing methyl naphthalene is used as the entrainer.

9. A process according to Claims 1 to 3, characterized in that a mixture of the entrainers claimed in Claims 5 to 8 is used as the entrainer.

10. A process according to any one of Claims 1 to 9, characterized in that the pitch is treated at temperatures in the range of from 80°C to 300°C, preferably from 120 to 250°C, with a mixture of a supercritical gas and a subcritical entrainer.

11. A process according to any one of Claims 1 to 10, characterized in that the pitch is treated at pressures in the range of from 80 to 300 bar (8 to 30 MPa), preferably from 150 to 250 bar (15 to 25 MPa), with a mixture of a supercritical gas and a subcritical entrainer.

12. A process according to Claims 1 to 11, characterized in that the pitch concentration in the supercritical solution is from 2 to 40% by weight, preferably from 5 to 30% by weight.

13. The use of the TI-free fractions obtainable according to Claim 1, where appropriate mixed with high-boiling aromatic hydrocarbon fractions, as a soot raw-material.

14. The use of the mixture of QI-free fractions obtainable according to Claim 1 as an impregnating agent for moulded carbon bodies.

15. The use of the mixture of ash-free fractions obtainable according to Claim 1, where appropriate after distilling off oils, as an electrode binding material.

16. The use of the ash-rich fraction obtainable according to Claim 1 for producing coking coal additives.


**Revendications**

1. Procédé pour le fractionnement de brais de houille par extraction à température et à pression accrues dans un gaz surcritique et séparation des fractions de brai individuelles en plusieurs étapes par réduction de la pression ou/et par augmentation de la température, caractérisé en ce que l'extraction à l'aide du gaz surcritique s'effectue en présence d'un agent d'entraînement, moyennant quoi les brais sont dissous, à l'exception des matières solides, et le gaz surcritique et l'agent d'entraînement sont recyclés vers l'étape d'extraction après séparation des fractions de brai.

2. Procédé selon la revendication 1, caractérisé en ce qu'en tant que gaz surcritique, on utilise l'un des composés suivants ou ses mélanges au-dessus de sa température critique et de sa pression critique : un hydrocarbure aliphatique comportant de préférence 2 à 5 atomes de carbone, un hydrocarbure oléfinique comportant de préférence 2 à 5 atomes de carbone, un hydrocarbure halogéné comportant notamment 1 à 4 atomes de carbone.

3. Procédé selon la revendication 1, caractérisé en ce qu'en tant que gaz surcritique, on utilise un gaz liquéfié (LPG).

4. Procédé selon les revendications 1 à 3, caractérisé en ce qu'en tant qu'agent d'entraînement, on utilise des hydrocarbures à un ou à plusieurs cycles qui sont éventuellement substitués par des groupes alkyle, en particulier avec 1 à 2 atomes de carbone ou par un groupe amino et qui peuvent être aussi bien aromatiques que totalement ou partiellement hydrogénés, des composés hétérocycliques à un ou à deux cycles, en particulier des composés hétérocycliques azotés, dans lesquels un noyau ou les deux sont hétérocycliques, des esters alkyliques d'acides aromatiques comportant de préférence 1 à 6 atomes de carbone dans le composant alcool ou leurs mélanges.

5. Procédé selon les revendications 1 à 3, caractérisé en ce qu'en tant qu'agent d'entraînement, on utilise du benzène de lavage.

6. Procédé selon les revendications 1 à 3, caractérisé en ce qu'en tant qu'agent d'entraînement, on utilise du benzène brut.

7. Procédé selon les revendications 1 à 3, caractérisé en ce qu'en tant qu'agent d'entraînement, on utilise une coupe de platforming dans le domaine d'ébullition de 70 à 200°C, de préférence de 100 à 150°C.

8. Procédé selon les revendications 1 à 3, caractérisé en ce qu'en tant qu'agent d'entraînement, on utilise du méthylnaphtalène ou une fraction contenant du méthylnaphtalène.

9. Procédé selon les revendications 1 à 3, caractérisé en ce qu'en tant qu'agent d'entraînement, on utilise un mélange des agents d'entraînement revendiqués dans les revendications 5 à 8.

10. Procédé selon l'une quelconque des revendications 1 à 9, caractérisé en ce que le brai est traité à des températures dans le domaine de 80°C à 300°C, de préférence de 120 à 250°C avec un mélange constitué d'un gaz surcritique et d'un agent d'entraînement sous-critique.

11. Procédé selon l'une des revendications 1 à 10, caractérisé en ce que le brai est traité à des pressions dans le domaine de 80 à 300 bars (8 à 30 MPa), de préférence de 150 à 250 bars (15 à 25 MPa) avec un mélange constitué d'un gaz surcritique et d'un agent d'entraînement sous-critique.

12. Procédé selon les revendications 1 à 11, caractérisé en ce que la concentration de brai dans la solution surcritique est de 2 à 40% en poids, de préférence de 5 à 10% en poids.

13. Utilisation des fractions exemptes de TI obtenues selon la revendication 1, éventuellement en mélange avec des fractions d'hydrocarbures aromatiques à point d'ébullition élevé en tant que matière première pour noir de carbone.

14. Utilisation du mélange des fractions exemptes de QI obtenues selon la revendication 1 en tant qu'agent d'imprégnation pour des corps moulés en carbone.

15. Utilisation du mélange des fractions exemptes de cendres obtenues selon la revendication 1, le cas échéant après élimination des huiles par distillation, en tant que liant pour électrodes.

16. Utilisation de la fraction riche en cendres obtenue selon la revendication 1 pour la préparation d'adjuvants de charbon à coke.

Fig. 1

Fig. 2

150 bar
150° C

Propan

Toluol

Normalpech

Gew.-%